Europäisches Patentamt

European Patent Office

Office européen des brevets

(19)

(11) **EP 0 881 814 A1**

(12) **EUROPÄISCHE PATENTANMELDUNG**

(43) Veröffentlichungstag:
02.12.1998 Patentblatt 1998/49

(51) Int. Cl.⁶: $H04M\ 9/08$

(21) Anmeldenummer: 98105459.6

(22) Anmeldetag: 26.03.1998

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 28.05.1997 DE 19722311

(71) Anmelder: **Deutsche Telekom AG**
**53113 Bonn (DE)**

(72) Erfinder: **Scholz, Markus**
**13467 Berlin (DE)**

(54) **Verfahren zur Bestimmung des Schrifttweitenfaktors Alpha zur Einstellung der Adaptionsgeschwindigkeit des NMLS-Adaptionsalgorithmus**

(57)    Das erfindungsgemäße Verfahren ist auf eine möglichst zeitgenaue Bestimmung des Schrittweitenfaktors ($\alpha$) ausgerichtet, so daß eine zeitgenaue Einstellung der Adaptionsgeschwindigkeit des NLMS-Adaptionsalgorithmus möglich ist.

Erfindungsgemäß wird der Schrittweitenfaktor ($\alpha$) in Abhängigkeit der beiden Mikrofonsignale ($y_1$ und $y_2$), des Mikrofonsummensignals ($y$), des gestörten Rest-echos ($\epsilon$) und des Signals aus dem fernen Raum ($x$) mittels Hilfe von Fuzzy-Logik ermittelt.

Das erfindungsgemäße Verfahren dient der Einstellung der Adaptionsgeschwindigkeit des NLMS-Adaptionsalgorithmus mit Hilfe der zeitgenauen Ermittlung des Schrittweitenfaktors ($\alpha$) unter Verwendung von zwei Mikrofonen.

Fig. 2

**Beschreibung**

Das erfindungsgemäße Verfahren dient zur Bestimmung des Schrittweitenfaktors $\alpha$ für einen Echokompensator mit einem FIR-Filter, dessen Koeffizienten durch den NLMS-Adaptionsalgorithmus automatisch angepaßt werden.

Ein Echokompensator ist in dem Zeitschriftenaufsatz S.Yamamoto, S.Kitayama, Trans. of the IECE of Japan, Vol. E 65, No. 1, Jan. 1982, S.1-8 beschrieben. Für die optimale Größe des Schrittweitenfaktors $\alpha$ wird der Ausdruck

$$\alpha_{opt} = \frac{1}{1+\dfrac{\sigma_n^2}{\sigma_x^2}\dfrac{1}{\|\Delta h\|^2}} \qquad (1)$$

angegeben. $\sigma_x$ ist die Streuung des Eingangssignals. Die nicht direkt meßbare Streuung der Störung, $\sigma_n$, wird mittels eines zweiten adaptiv eingestellten Filters geschätzt. Die ebenfalls nicht direkt meßbare Parameterfehlernorm $\|\Delta h\|$ wird aus sogenannten Totzeitkoeffizienten (eine Reihe von Koeffizienten, die bei erfolgtem Abgleich 0 werden müssen) geschätzt.

Da die nicht meßbare Streuung der Störung, $\sigma_n$, nicht bekannt ist, ist auch die Parameterfehlernorm $\|\Delta h\|$ weder direkt noch indirekt meßbar. Einzelne Größen können daher nur geschätzt werden.

In dem Buch R. Frenzel, Fortschr.-Ber. VDI-Reihe 10 Nr. 228, Düsseldorf 1992 ist ein Echokompensator beschrieben, bei dem zur Bestimmung der optimalen Schrittweite von dem Zusammenhang

$$\alpha_{opt} = \frac{\sigma_x^2}{\sigma_e^2}\|\Delta h\|^2 \qquad (2)$$

ausgegangen wird, den man durch Umformung aus Gl. (1) erhalten kann, wenn man die Streuung des gestörten Fehlers einführt:

$$\sigma_e^2 = \sigma_x^2\|\Delta h\|^2 + \sigma_n^2. \qquad (3)$$

Auch hier wird die Parameterfehlernorm aus den Totzeitkoeffizienten geschätzt. Zur Verbesserung dieser Schätzung bei Parameteränderungen wird vorgeschlagen, aus den Cepstren der Ausgangssignale von Modell und System eine Größe zu gewinnen, die einerseits der Erkennung von Systemänderungen dient und andererseits eine Größe liefert, mit der die Totzeitkoeffizienten in diesem Fall neu initialisiert werden, um so die Schrittweite zu vergrößern.

Die praktische Erprobung einer derartigen Schrittweitensteuerung hat gezeigt, daß es bei Sprachsignalen sowohl mit als auch ohne Gegensprechen häufig zu Fehlentscheidungen kommt. Im Ergebnis dessen wird die Schrittweite zu groß eingestellt, so daß die Koeffizienten des adaptiven Filters eine große Streuung besitzen. Außerdem ist der numerische Aufwand für die zum Teil komplexen Berechnungen erheblich.

In dem Aufsatz T.J.Shan, T. Kailath, Adaptive Algortihms with an Automatic Gain Control Feature, IEEE Transactions on Circuits and Systems, Vol. 35, No. 1, Jan. 1988 ist ein Echokompensator mit Schrittweitensteuerung beschrieben, bei dem die Schrittweite aus

$$\alpha(k+1) = K\,\zeta(k) \qquad (4)$$

mit

$$\zeta(k) = \lambda\zeta(k-1) + (1-\lambda)\varepsilon(k)\frac{1}{M}\sum_{j=1}^{M}x_{j(k)} \qquad (5)$$

bestimmt wird. Der damit erhaltene Ausdruck für $\zeta(k)$ ist eine Schätzung für den arithmetischen Mittelwert aus einer Reihe von Kreuzkorrelationsfunktionen.
Diese besitzen in der Regel unterschiedliche Vorzeichen, so daß diese Werte nicht ausreichend Auskunft über die Korrelation von $\varepsilon$ und x geben.

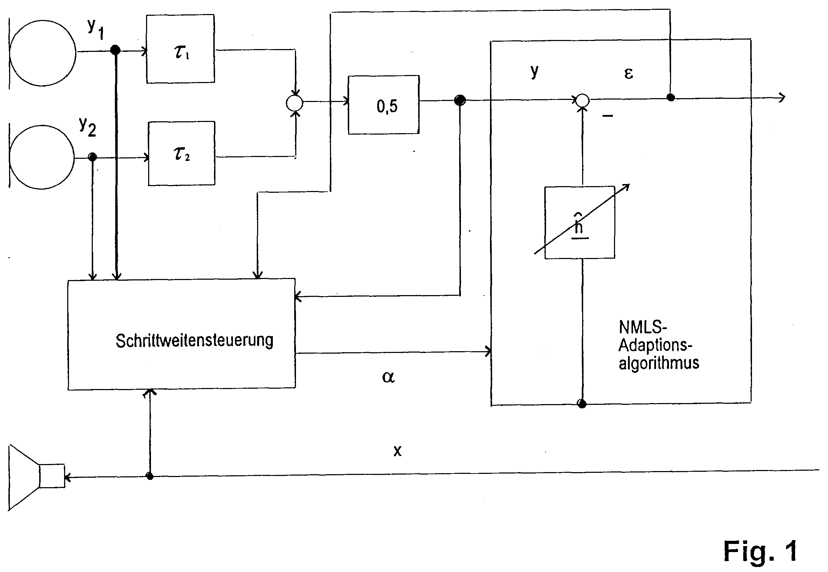

Das Ziel der Erfindung ist es, eine Schrittweitensteuerung zu schaffen, die die erwähnten Nachteile nicht aufweist und eine möglichst gute Annäherung der Schrittweite an ihre optimale Größe gewährleistet. Die technische Aufgabe besteht darin, ein Verfahren zu entwickeln, das eine möglichst zeitgenaue Bestimmung des Schrittweitenfaktors $\alpha$ ermöglicht, so daß die Adaptionsgeschwindigkeit des Adaptionsalgorithmus der Situation entsprechend eingestellt wird und somit zeitvariant ist.
Als Adaptionsalgorithmus wird der NLMS-Adaptionsalgorithmus eingesetzt. Um den Schrittweitenfaktor $\alpha$ zu bestimmen, sind zwei Mikrofone notwendig (siehe Fig.1). Das Mikrofonsignal $y_1$ wird um eine Zeitkonstante $\tau_1$ verzögert. Ebenso wird das Mikrofonsignal $y_2$ um eine Zeitkonstante $\tau_2$ verzögert. Mit Hilfe dieser beiden Zeitverzögerungen kann die Richtcharakteristik der Mikrofone eingestellt werden. Damit keine Zeitverzögerung auftritt, wird mindestens eine der Zeitkonstanten $\tau_1$ oder $\tau_2$ gleich null gesetzt. Die beiden verzögerten Mikrofonsignale werden addiert und die Summe durch zwei geteilt. Das so erzeugte Mikrofonsummensignal y dient als Eingangswert für den NLMS-Adaptionsalgorithmus. Der NLMS-Adaptionsalgorithmus bildet mit Hilfe des FIR-Filters $\hat{h}$ im Mikrofonsummensignal das Echo nach. Dieses geschätzte Echo wird vom Mikrofonsummensignal y abgezogen, womit man das gestörte Restecho $\varepsilon$ erhält. Das gestörte Restecho $\varepsilon$ wird in den fernen Raum übertragen. Der Schrittweitenfaktor $\alpha$ wird in Abhängigkeit der beiden Mikrofonsignale $y_1$ und $y_2$, des Mikrofonsummensignals y, des gestörten Restechos $\varepsilon$ und des Signals aus dem fernen Raum x berechnet.

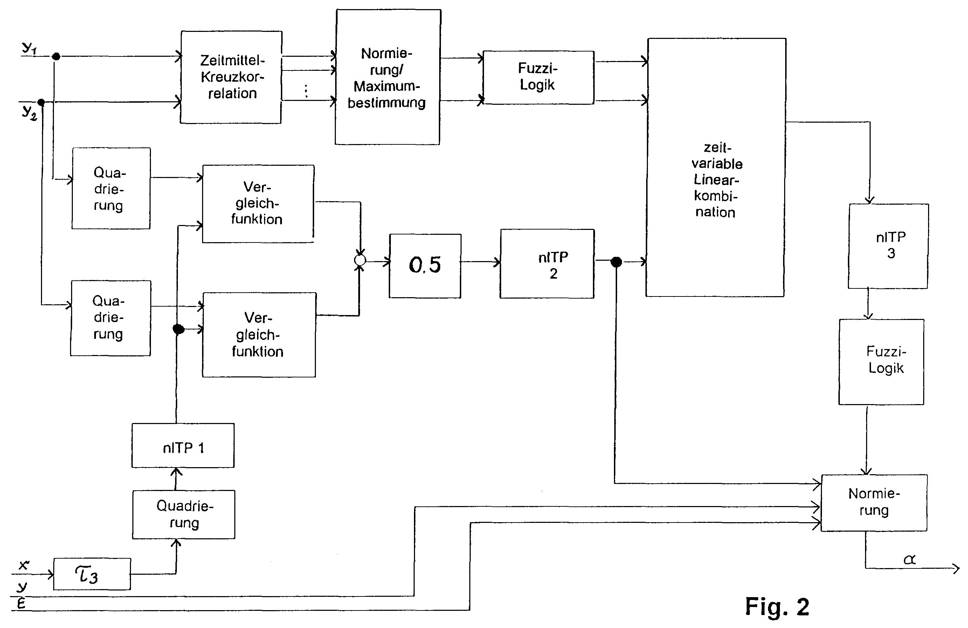

Zur Bestimmung des Schrittweitenfaktors $\alpha$ wird von den beiden Mikrofonsignalen $y_1$ und $y_2$ in jedem Abtastschritt die Zeitmittel-Kreuzkorrelationsfunktion berechnet (siehe Fig. 2). Diese Funktion wird anschließend normiert und ihr absolutes Maximum bestimmt. Sowohl die Stelle als auch die Höhe des Maximums der Zeitmittel-Kreuzkorrelationsfunktion werden situationsabhängig mit Hilfe von Fuzzy-Logik ausgewertet. Zusätzlich wird ein Pegelvergleich für beide Mikrofonsignale $y_1$ und $y_2$ durchgeführt. Es wird jeweils der Pegel des Mikrofonsignals $y_1$ und $y_2$ mit dem Pegel des um die Zeitkonstante $\tau_3$ zeitverzögerten Signals aus dem fernen Raum x verglichen. Dazu werden die beiden Mikrofonsignale $y_1$ und $y_2$ und das verzögerte Signal aus dem fernen Raum x quadriert. Dann wird mittels eines ersten nichtlinearen Tiefpaß-Filters nlTP 1 das Leistungsübertragungsverhalten des Lautsprecher-Raum-Mikrofon-Systems nachgebildet. Der Vergleich wird mit einer Vergleichsfunktion, die das jeweilige quadrierte Mikrofonsignal mit dem verzögerten, quadrierten und gefilterten Signal aus dem fernen Raum x in Beziehung setzt, durchgeführt. Von den Vergleichergebnissen wird dann das arithmetische Mittel berechnet und dieses mit einem zweiten nichtlinearen Tiefpaß-Filter nlTP 2 geglättet. Am Ausgang des zweiten nichtlinearen Tiefpaßfilters nlTP 2 liegt dann das Endergebnis des Pegelvergleichs vor. In Abhängigkeit von der Situation wird nun das Ergebnis der Auswertung der Kreuzkorrelationsfunktion mit Hilfe von Fuzzy-Logik und das Endergebnis des Pegelvergleichs durch eine Linearkombination zusammengefaßt. Das Ergebnis der Kombination wird anschließend mit einem dritten nichtlinearen Tiefpaß-Filter nlTP 3 geglättet. Mit Hilfe von Fuzzy-Logik wird aus dieser geglätteten Größe ein Schrittweitenfaktor $\alpha$ berechnet, der dann noch in Abhängigkeit von dem Mikrofonsummensignal y, dem gestörten Restecho $\varepsilon$ und dem Endergebnis des Pegelvergleichs normiert wird. Nach der Normierung erhält man den endgültigen Schrittweitenfaktor $\alpha$, der die Adaptionsgeschwindigkeit des NLMS-Algorithmus festlegt.

Aufstellung der verwendeten Bezugszeichen:

| | |
|---|---|
| $\alpha$ | Schrittweitenfaktor |
| $y_1$ | Mikrofonsignal (erstes Mikrofon) |
| $y_2$ | Mikrofonsignal (zweites Mikrofon) |
| y | Mikrofonsummensignal |
| x | Signal aus dem fernen Raum |
| $\tau_1$ | Zeitkonstante (erstes Mikrofon) |
| $\tau_2$ | Zeitkonstante (zweites Mikrofon) |
| $\tau_3$ | Zeitkonstante für Signal aus dem fernen Raum x |
| $\varepsilon$ | gestörtes Restecho |
| nlTP1 | erstes nichtlineares Tiefpaßfilter |
| nlTP2 | zweites nichtlineares Tiefpaßfilter |
| nlTP3 | drittes nichtlineares Tiefpaßfilter |
| $\hat{h}$ | FIR-Filter des NLMS-Adaptionsalgorithmus |

**Patentansprüche**

1. Verfahren zur Bestimmung des Schrittweitenfaktors $\alpha$ zur Einstellung der Adaptionsgeschwindigkeit des NLMS-Adaptionsalgorithmus unter Verwendung von zwei Mikrofonen, bei denen das Mikrofonsignal des ersten Mikrofons ($y_1$) um die Zeitkonstante ($\tau_1$) und das Mikrofonsignal des zweiten Mikrofons ($y_2$) um die Zeitkonstante ($\tau_2$) verzögert werden, so daß die Richtcharakteristik der Mikrofone eingestellt werden kann, wobei eine der Zeitkonstanten ($\tau_1$) bzw. ($\tau_2$) gleich 0 gesetzt wird, daß aus den beiden Mikrofonsignalen ($y_1$;$y_2$) ein Mikrofonsummensignal (y) gebildet wird, welches als Eingangssignal für den NLMS-Adaptionsalgorithmus dient, daß das gestörte Restecho ($\varepsilon$) ermittelt wird, indem mittels des FIR-Filters ($\hat{h}$) des NLMS-Adaptionsalgorithmus das Echo im Mikrofonsummensignal (y) nachgebildet und vom Mikrofonsummensignal (y) abgezogen wird, und daß das ermittelte Restecho ($\varepsilon$) in den fernen Raum übertragen wird,
**dadurch gekennzeichnet,**

- daß von den beiden Mikrofonsignalen ($y_1$; $y_2$) in jedem Abtastschritt die Zeitmittel-Kreuzkorrelationsfunktion berechnet und normiert wird und daß danach ihr absolutes Maximum bestimmt wird,

- daß sowohl die Stelle als auch die Höhe des Maximums der Zeitmittel-Kreuzkorrelationsfunktion situationsabhängig mittels Fuzzy-Logik ausgewertet werden,

- daß zusätzlich ein Pegelvergleich für die Mikrofonsignale ($y_1$; $y_2$) durchgeführt wird, bei dem jeweils der Pegel des Mikrofonsignals ($y_1$ und $y_2$) mit dem Pegel des um die Zeitkonstante ($\tau_3$) verzögerten Signals aus dem fernen Raum (x) verglichen wird, wobei die Mikrofonsignale ($y_1$; $y_2$) und das verzögerte Signal aus dem fernen Raum (x) quadriert werden und daß mittels eines ersten nichtlinearen Tiefpaß-Filters (nlTP1) das Leistungsübertragungsverhalten des Lautsprecher-Raum-Mikrofon-Systems nachgebildet wird,

- daß ein Pegelvergleich mit einer Vergleichsfunktion durchgeführt wird, die das jeweilige quadrierte Mikrofonsignal ($y_1$ und $y_2$) mit dem verzögerten, quadrierten und gefilterten Signal aus dem fernen Raum (x) in Beziehung setzt,

- daß aus dem Endergebnis des Pegelvergleichs das arithmetische Mittel berechnet und mittels eines zweiten nichtlinearen Tiefpaßfilters (nlTP2) geglättet wird,

- daß mit Hilfe der Fuzzy-Logik das Ergebnis der Zeitmittel-Kreuzkorrelationsfunktion und das Ergebnis des Pegelvergleichs über eine Linearkombination zusammengefaßt werden, und daß das daraus resultierende Endergebnis mittels eines dritten nichtlinearen Tiefpaßfilters (nlTP 3) geglättet wird, und

- daß mittels Fuzzy-Logik aus dem geglätteten Endergebnis der Schrittweitenfaktor ($\alpha$) berechnet und in Abhängigkeit vom Mikrofonsummensignal (y) dem gestörten Restecho ($\varepsilon$) und dem Endergebnis des Pegelvergleichs normiert wird.

Fig. 1

Fig. 2

**Europäisches Patentamt**

**EUROPÄISCHER RECHERCHENBERICHT**

Nummer der Anmeldung

EP 98 10 5459

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE 195 25 382 A (DEUTSCHE TELEKOM AG) 16. Januar 1997 * das ganze Dokument * | 1 | H04M9/08 |
| A | US 3 784 747 A (BERKLEY D ET AL) 8. Januar 1974 * Spalte 6, Zeile 61 – Spalte 7, Zeile 45; Abbildungen 1,9 * | 1 | |

RECHERCHIERTE SACHGEBIETE (Int.Cl.6)

H04M

Der vorliegende Recherchenbericht wurde für alle Patentansprüche erstellt

| Recherchenort | Abschlußdatum der Recherche | Prüfer |
|---|---|---|
| DEN HAAG | 14. September 1998 | De Iulis, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument